(19) Europäisches Patentamt
European Patent Office
Office européen des brevets

(11) **EP 2 693 613 B1**

(12) **EUROPEAN PATENT SPECIFICATION**

(45) Date of publication and mention
of the grant of the patent:
**07.03.2018   Bulletin 2018/10**

(51) Int Cl.:
***H02K 21/44*** *(2006.01)*

(21) Application number: **12382315.5**

(22) Date of filing: **03.08.2012**

(54) **Hybrid electric reluctance machine**

Hybridelektrische Reluktanzmaschine

Machine électrique hybride à réluctance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2014   Bulletin 2014/06**

(73) Proprietor: **Avila Cusicanqui, Oscar Rolando Sucre (BO)**

(72) Inventors:
• **Andrada Gascon, Pere**
  **08800 Vilanova i la Geltrú  - Barcelona (ES)**
• **Avila Cusicanqui, Oscar Rolando**
  **Sucre (BO)**
• **Blanque Molina, Balduí**
  **08800 Vilanova i la Geltrú - Barcelona (ES)**
• **Martinez Piera, Eusebi**
  **08800 Vilanova i la Geltrú (ES)**
• **Torrent Burgues, Marcel**
  **08800 Vilanova i la Geltrú - Barcelona (ES)**
• **Adelantado Perez, Javier María**
  **Sucre (BO)**

(74) Representative: **Carvajal y Urquijo, Isabel et al Clarke, Modet & Co.**
  **Suero de Quiñones, 34-36**
  **28002 Madrid (ES)**

(56) References cited:
**EP-A1- 0 838 891        CN-A- 102 184 809**
**GB-A- 2 052 174        US-A1- 2011 260 672**
**US-A1- 2012 181 793    US-B1- 6 242 834**

**Description**

Object of the Invention

The present invention relates to a hybrid electric reluctance machine, the structural configuration of which has a combination of electromagnets and permanent magnets, and it has been especially designed to build different types of rotary or linear motors and generators, or other electrical drives, having high energy efficiency and remarkable constructive simplicity.

Background of the Invention

It can generally be said that motors and electrical drives are the largest consumers of electricity in industry, and one of the largest consumers in the tertiary sector. According to *Commission Regulation (EC) No 640/2009 of 22 July 2009 implementing Directive 2005/32/EC of the European Parliament and of the Council with regard to ecodesign requirements for electric motors,* motors and electrical drives have a 20-30% energy efficiency improvement margin, and should this actually be done, it would involve huge energy savings and a considerable reduction of atmospheric emissions.

The electric-powered mobility has opened up new market possibilities and entails new challenges for motors and electrical drives. Therefore, motors and electrical drives for electric-powered drive must meet the following requirements:

- High torque density and high power density.
- Operating at constant power in a broad speed range.
- High energy efficiency in all operating ranges.
- Overload capacity.
- Robustness, reliability and ease in manufacture.
- Reduced torque ripple and low noise level.
- Low cost.

Today it does not seem possible to meet these challenges with three-phase asynchronous induction motors and drives. However this objective is within reach of technologies such as brushless direct current motors (BDCM), the permanent magnet synchronous motors (PMSM) or switched reluctance motors (SRM).

The hybrid electric reluctance motors and drives are presented as an alternative to meet such objectives, given that they combine the high power density of brushless direct current motors and permanent magnet synchronous motors with the constructive simplicity of switched reluctance motors.

Document WO2005/107356 of Mr. Oscar Rolando Ávila Cusicanqui discloses a rotary hybrid electric reluctance motor comprising a magnetic first and second structure indistinctly corresponding to a rotor and a stator. The first structure has first poles forming a plurality of magnetic assemblies in which there are combined in parallel polar arrangement a coil and a permanent magnet, capable of generating a magnetic flux $\phi_C$ of the coil and a magnetic flux $\phi_M$ of the magnet respectively. The second structure has an equal number of second poles in opposition with the first poles and separated therefrom by means of an air gap, said structures being configured to allow a rotating movement with respect to one another. The particularity of this motor is that the magnetic flux $\phi_C$ of the activated coils is added to the magnetic flux $\phi_M$ of the permanent magnets associated with the coils in the same assembly to generate a magnetic flux $\phi_G$ through the air gap, the value of said magnetic flux $\phi_G$ when the coils of the first structure are deactivated is insignificant. Greater transmission of torque in working conditions in relation to a conventional switched reluctance motor of the same size is thereby achieved, whereas in conditions in which the coils are deactivated and the rotor is in movement, the cogging torque between the magnets and the poles of the stator and the rotor is virtually nil, given that the flux of the magnet does not go through the air gap. The cogging torque, also known as detent torque, produces an unwanted effect that disrupts motor operation, so it is desirable for its value to be virtually nil, as occurs in this motor.

The hybrid electric reluctance motor of document WO2005/107356 nevertheless has some drawbacks, despite the significant operating features discussed above. These drawbacks relate expressly with both certain functional design parameters and with the structural configuration thereof, as explained below.

Concerning the functional design parameters, the drawbacks derived from the parity existing between the number of poles of the stator and of the rotor, which in turn involves an alignment of all the poles in a minimum reluctance position, stand out. Motor operation is based on the simultaneous activation of all the coils of the first structure (stator), which are connected in series, by means of the same phase current. The switching, activation/deactivation, of the currents in the phases is done by means of an electronic power converter, in which the switching sequence of the solid state switches forming it is controlled by the position of the rotor by means of position transducers. This causes the second structure (rotor) to rotate with respect to a drive shaft until its poles are aligned with the poles of the first structure. To initiate a starting torque and maintain a uniform non-pulsed rotation, it is necessary to have a plurality of second structures throughout and in parallel position, the poles of which have a positional offset with respect to the poles of the remaining second structures. The motor therefore works in multistage conditions, taking advantage of the fact that the poles of the stator and of the rotor of one stage are misaligned when the other one reaches the minimum reluctance position. The greater or lesser rotation uniformity and power acquired by this motor depends on having a larger or smaller number of second structures (stages), respectively. Therefore, greater uniformity and greater power also entail a larger rotor size.

Concerning the structural configuration, the drawbacks derived from the integrity of the magnetic assemblies of the first structure, which are arranged integrally therewith, forming one and the same indivisible structural unit, stand out. This creates certain assembly difficulties during the manufacturing process and in subsequent repair and maintenance work. Furthermore, the location of the coils is practically limited to the stator yoke, which again contributes to having to have a larger stator. Document US 2012/181793 discloses (see the embodiments of figures 2-7, 16 and 17) a hybrid electric reluctance machine comprising:- a first structure with poles of the first structure (200, 210) forming a plurality of magnetic assemblies (100) in which a coil (140, 141) and a permanent magnet (130) are combined; and- a second structure (110) with poles (150) of the second structure in opposition with the poles of the first structure (200, 210) and separated therefrom by means of an air gap, said structures being configured to allow relative rotational movement with respect to one another; where the magnetic assemblies (100) are arranged independently, wherein each assembly (100) comprises:

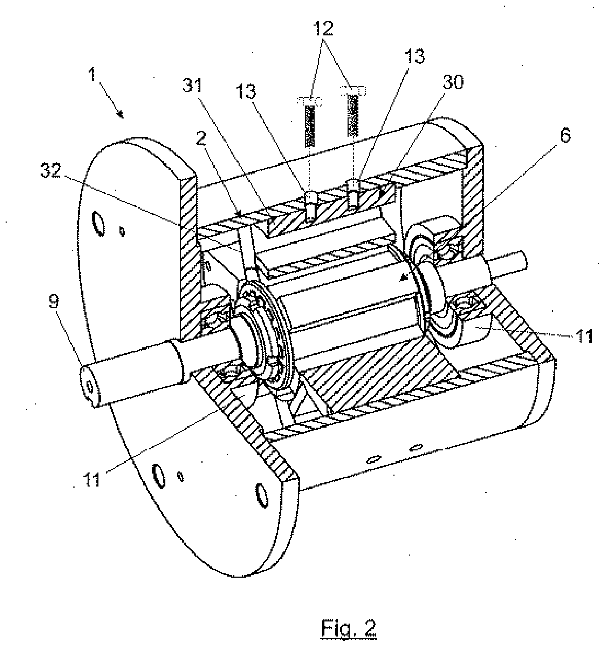

- a U-shaped magnetic core (100) structurally and magnetically independent from the first structure, the arms of which form a first pole (200) and a second pole (210) spaced circumferentially or linearly;
- at least one permanent magnet (130), being defined between the arms an inner non-ferromagnetic gap; and
- a coil (140, 141) being wound on each of the arms the windings of which take up a part of the inner non-ferromagnetic gap between poles (200, 210), where the first pole (200) and the second pole (210) of at least one assembly (100) are aligned respectively with a third pole (150) and a fourth pole (150) of the second structure (110) in a minimum reluctance position (see figure 2). The object of the present invention consists of optimizing functional design parameters and the structural configuration of such hybrid electric reluctance machines, which allows solving the problems discussed above, in addition to improving their current features. Therefore, the hybrid electric machine of the present Invention generally has with respect to similar machines shorter magnetic circuits with smaller losses in the air gap, greater power density, better efficiency, fault-tolerant constructive simplicity, easy repairs, better use of materials and a smaller size, in addition to maintaining a virtually nil cogging torque.

Description of the Invention

Claim 1 defines the hybrid electric reluctance machine of the present invention. A minimum reluctance position corresponds with an angular position of $\theta=0°$.

In rotary configurations, each arm preferably comprises a curved end following a direction parallel to the perimeter formed by the ends of the second poles. This allows uniformity in thickness of the air gap between the first and the second poles.

According to a first preferred configuration, the first structure is fixed, whereas the second structure is configured to rotate concentrically inside the first structure. This configuration corresponds to that of a rotary machine having an inner rotor. The different constructive variants allowed by this first configuration correspond to the following expressions:

$$N_P= k \cdot m$$

$$N_S= 2 \cdot k \cdot m$$

$$N_R= k(2m-1)$$

where $N_P$ is the total number of magnetic assemblies; $N_S$ is the total number of first poles; $N_R$ is the total number of second poles; $m$ is the number of electrical phases supplying the coils; and $k$ is a multiplier parameter which can take any integer value equal to or greater than 1.

The magnetic assemblies in turn have an angle $\gamma$ with respect to one another determined by the expression:

$$\gamma = \frac{360^\circ}{N_P}$$

where $N_P$ is the total number of magnetic assemblies.

The second poles in turn have an angle $\alpha$ with respect to one another determined by the expression:

$$\alpha = \frac{360^\circ}{N_R}$$

where $N_R$ is the total number of second poles.

Finally, the first poles have an angle $\delta$ with respect to one another determined by the expression:

$$\delta = \gamma - \alpha = \frac{360^\circ \cdot (N_R - (k \cdot m))}{k \cdot m \cdot N_R}$$

The most common values for 3 and 4 electrical phases of rotary machines having an inner rotor are shown in Table I.

TABLE I

| k | m | $N_P$ | $N_S$ | $N_R$ | $\alpha$ | $\gamma$ | $\delta$ |
|---|---|---|---|---|---|---|---|
| 1 | 3 | 3 | 6 | 5 | 72° | 120° | 48° |
| 2 | 3 | 6 | 12 | 10 | 36° | 60° | 24° |
| 3 | 3 | 9 | 18 | 15 | 24° | 40° | 16° |
| 4 | 3 | 12 | 24 | 20 | 18° | 30° | 12° |
| 5 | 3 | 15 | 30 | 25 | 14.4° | 24° | 9.6° |
| 6 | 3 | 18 | 36 | 30 | 12° | 20° | 8° |
| 1 | 4 | 4 | 8 | 7 | 51.43° | 90° | 38.57° |
| 2 | 4 | 8 | 16 | 14 | 25.71° | 45° | 19.29° |
| 3 | 4 | 12 | 24 | 21 | 17.14° | 30° | 12.86° |
| 4 | 4 | 16 | 32 | 28 | 12.86° | 22.50° | 9.64° |
| 5 | 4 | 20 | 40 | 35 | 10.29° | 18° | 7.71° |
| 6 | 4 | 24 | 48 | 42 | 8.57° | 15° | 6.43° |

According to a second preferred configuration, the first structure is fixed, whereas the second structure is configured to rotate concentrically outside the first structure. This configuration corresponds to that of a rotary machine with an outer rotor. The different constructive variants allowed by this second configuration correspond to the following expressions:

$$N_P = k \cdot m$$

$$N_S = 2 \cdot k \cdot m$$

$$N_R = 2 \cdot k(m+1)$$

where $N_P$ is the total number of magnetic assemblies; $N_S$ is the total number of first poles; $N_R$ is the total number of second poles; $m$ is the number of electrical phases supplying the coils; and $k$ is a multiplier parameter taking any integer value equal to or greater than 1.

The preceding expressions relating to the angles are also valid for rotary machines having both an inner rotor and an outer rotor. Therefore, the most common values for 3 and 4 electrical phases in such machines are shown in Table II.

TABLE II

| k | m | $N_P$ | $N_S$ | $N_R$ | $\alpha$ | $\gamma$ | $\delta$ |
|---|---|---|---|---|---|---|---|
| 1 | 3 | 3 | 6 | 8 | 45º | 120º | 75º |
| 2 | 3 | 6 | 12 | 16 | 22.5º | 60º | 37.5º |
| 1 | 4 | 4 | 8 | 10 | 36º | 90º | 54º |
| 2 | 4 | 8 | 16 | 20 | 18º | 45º | 27º |

According to a third preferred configuration, the first structure is fixed, whereas the second structure is configured to move linearly with respect to said first structure. This configuration corresponds to that of a linear machine.

According to a variant of the third preferred configuration, the machine comprises two first structures arranged symmetrically in a fixed position, between which there are arranged two second structures arranged symmetrically which are configured to move linearly with respect to said first structures.

The machine of the present invention can be built by means of single stage or multistage configuration, which affects movement uniformity and the power of the machine.

According to the multistage configuration, the first structure and the second structure are arranged in a plurality of parallel layers, where:

- the first poles of the first structure have a nil positional offset $\theta_S$ between one another in each of the layers; and where:
- the positional offset $\theta_S$ between the second poles of two consecutive parallel layers has the following ratio:

$$\theta_S = \frac{360^o}{m \cdot N_R}$$

where "$N_R$" corresponds to the total number of second poles of each parallel layer, "$m$" corresponds to the number of electrical phases supplying the coils and "$k$" corresponds to a multiplier parameter taking any integer value equal to or greater than 1.

Each layer corresponds with a specific power stage, the number of power stages coinciding with the number of electrical phases. The higher the number of layers, i.e., the higher the number of power stages, the greater the rotation uniformity and the higher the power obtained.

The different constructive variants allowed by the multistage configuration for rotary machines having an inner rotor correspond to the following expressions:

$$N_P = k \cdot m$$

$$N_S = k \cdot m$$

$$N_R = N_S$$

where $N_P$ is the total number of magnetic assemblies; $N_S$ is the total number of first poles; $N_R$ is the total number of second poles; $m$ is the number of electrical phases supplying the coils; and $k$ is a multiplier parameter taking any integer value equal to or greater than 1.

The preceding expressions relating to the angles are also valid for single stage or multistage rotary machines having both an inner rotor and an outer rotor. Therefore, the most common values for 3 and 4 electrical phases, in such machines are shown in Table III.

TABLE III

| k | m | $N_P$ | $N_S$ | $N_R$ | $\alpha$ | $\gamma$ | $\delta$ | $\theta_S$ |
|---|---|---|---|---|---|---|---|---|
| 1 | 3 | 3 | 6 | 6 | 60º | 120º | 60º | 20º |
| 2 | 3 | 6 | 12 | 12 | 30º | 60º | 30º | 10º |
| 1 | 4 | 4 | 8 | 8 | 45º | 90º | 45º | 11.25º |
| 2 | 4 | 8 | 16 | 16 | 22.5º | 45º | 22.5º | 5.625º |

Generally, in single stage configurations the coils of each magnetic assembly or of magnetic assemblies connected in series are supplied from the same phase, which is different from the phase supplying the remaining of assemblies or groups of assemblies in series. In the multistage configuration, the magnetic assemblies of the same stage are supplied from the same phase, which is different from the phase supplying the assemblies of the remaining stages.

Brief Description of the Drawings

A series of drawings which aid in better understanding the invention and expressly relating to different preferred embodiments of said invention provided as a non-limiting example thereof is very briefly described below.

Figure 1 depicts a cross-section of the machine according to the first preferred configuration.
Figure 2 depicts a perspective view, with a longitudinal section, of the machine of Figure 1.
Figure 3 depicts a diagram of the electronic power converter.
Figures 4A and 4B depict the distribution of the flux lines in the alignment position and in the non-alignment position, respectively, according to a prototype built according to the first preferred configuration.
Figure 5 depicts the magnetization curves according to the prototype.
Figure 6 depicts the static torque curves according to the prototype.
Figure 7 depicts the detent torque according to the prototype.
Figure 8 depicts the features of torque-speed and efficiency speed according to the prototype.
Figure 9 depicts a cross-section of the machine according to a variant of the first preferred configuration.
Figure 10 depicts a cross-section of the machine according to a multistage variant of the first preferred configuration.
Figure 11 depicts a perspective view of the machine according to the multistage variant of Figure 10.
Figure 12 depicts a longitudinal section of the machine of Figure 10.
Figure 13 depicts a schematic front view of three parallel layers of the second structure of the machine according to the multistage variant of Figure 10.
Figure 14 depicts a cross-section of the machine according to the second preferred configuration.
Figure 15 depicts a perspective view, with a longitudinal section, of the machine of Figure 14.
Figure 16 depicts a diagram with the angles $\gamma$, $\alpha$ and $\delta$ of the rotary variants of the machine of the present invention.
Figure 17 depicts an elevational view of the machine according to the third preferred configuration.
Figure 18 depicts an elevational view of the machine according to a variant of the third preferred configuration.

Preferred Embodiment of the Invention

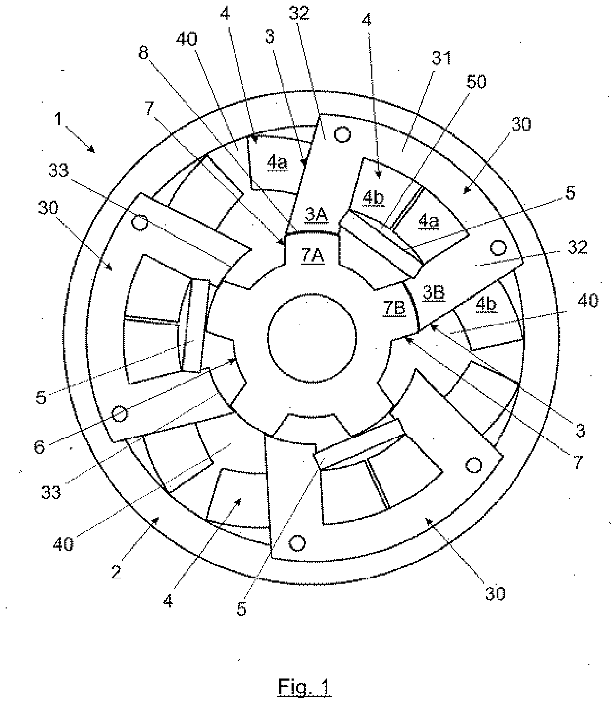

Figure 1 shows a cross-section of the machine according to the first preferred configuration. As can be seen, the hybrid electric reluctance machine (1) comprises:

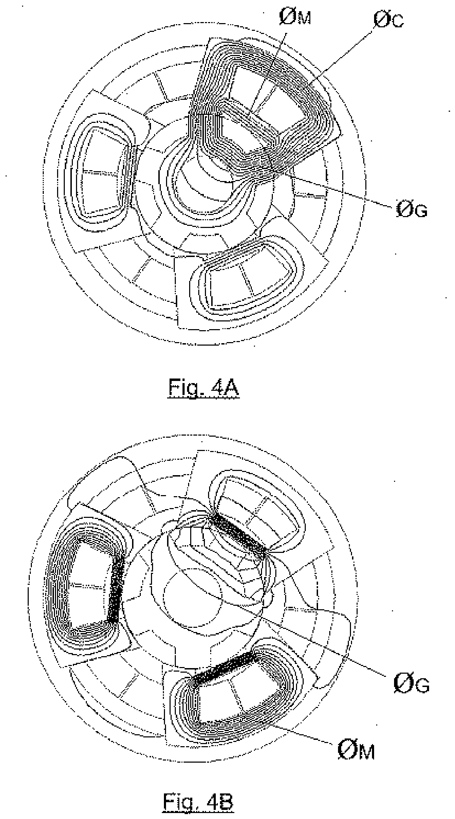

- a first structure (2) with first poles (3) forming a plurality of magnetic assemblies (30) in which a coil (4) and a permanent magnet (5) capable of generating a magnetic flux $\phi_C$ of the coil and a magnetic flux $\phi_M$ of the magnet, respectively, Figures 4A and 4B, are combined; and
- a second structure (6) with second poles (7) in opposition with the first poles (3) and separated therefrom by means of an air gap (8), said structures (2, 6) being configured to allow relative movement with respect to one another.

In turn, the magnetic assemblies (30) are arranged independently, separated from one another by non-ferromagnetic gaps (40), where each assembly (30) comprises:

- a magnetic core (31) structurally and magnetically independent from the first structure (2), forming a first pole (3A) and a second pole (3B) between the ends of which there is arranged at least one permanent magnet (5), at least one coil (4) being wound on said core (31).

As can be seen, the first pole (3A) and the second pole (3B) of one assembly (30) are aligned respectively with a third pole (7A) and a fourth pole (7B) of the second structure (6) in a minimum reluctance position.

The magnetic core (31) is U-shaped, the arms of which (32) form the first (3A) and the second pole (3B), an inner non-ferromagnetic gap (50) being defined between them and the permanent magnet (5). There is wound on each of the arms (32) a coil (4), the windings (4A, 4B) of which take up part of the non-ferromagnetic gap (40) between assemblies (30) and part of the inner non-ferromagnetic gap (50) between poles (3A, 3B). As can be seen, each arm (32) comprises a curved end (33) following a direction parallel to the perimeter formed by the ends of the second poles (7).

The non-ferromagnetic gaps (40, 50) preferably consist of air, i.e., hollow spaces, also being able to be occupied by no-ferromagnetic materials for aiding in building the motor, such as steel or aluminum.

Figure 2 shows a perspective view of the machine (1) of Figure 1. As can be seen, the first structure (2) is fixed and the second structure (6) is configured to rotate concentrically inside the first structure (2). The structures (2, 6) are configured to allow relative movement with respect to one another, using bearings (11) integral with the first structure (2) allowing the rotation of a shaft (9) integral with the second structure (6).

Figure 2 also shows with greater clarity the structural independence of the magnetic cores (31) and the first structure (2). This allows building the different components separately and subsequently facilitates assembly and maintenance or repair jobs for them. They can be quickly and easily assembled, for example, sliding the magnetic assemblies (30) along the inner face of the first structure (2) until reaching a sort of embossment or edge stopping its forward movement. They can be joined to one another, for example, by arranging a plurality of facing holes (13) in the magnetic assemblies (30) and in the first structure (2), and fixing both elements (30, 2) by means of using screws (12).

The magnetic independence of the magnetic cores (31) with respect to the first structure (2) prevents any type of magnetic interaction between the assemblies (30) and the first structure (2). Furthermore, since the magnetic assemblies (30) are arranged independently, separated from one another by non-ferromagnetic gaps (40), there is no magnetic interaction between them either.

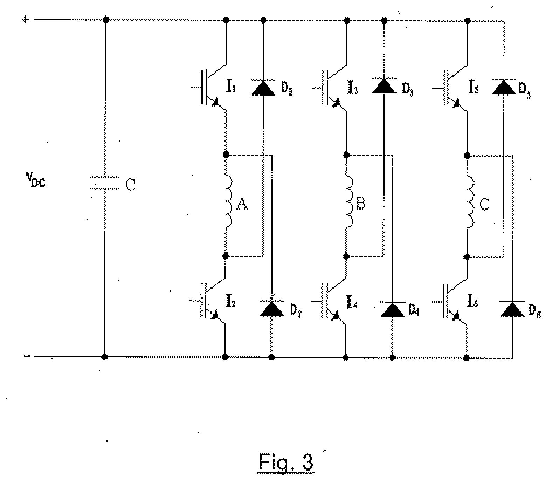

Figure 3 shows a diagram of the electronic converter used. Said converter uses hysteresis control for low speeds and single pulse control for high speeds. An incremental encoder is used as a speed position transducer.

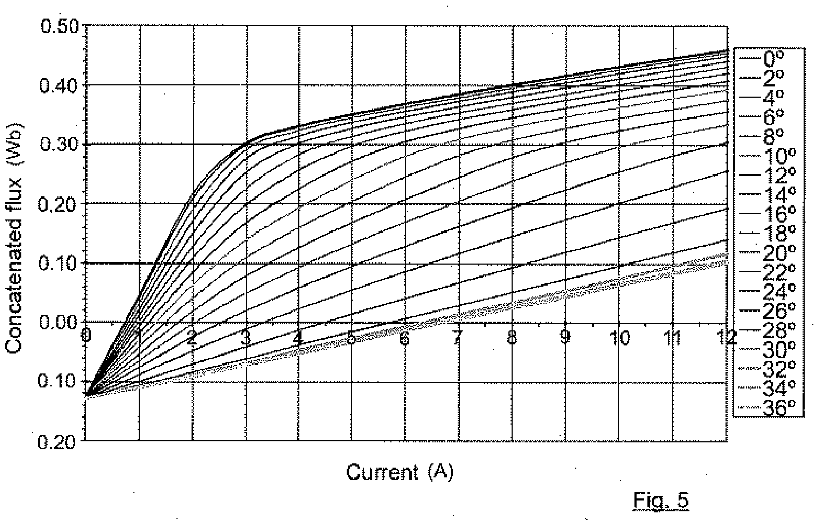

The flux distributions of Figures 4A and 4B, as well as the curves of Figures 5-8, have been obtained from a prototype built according to the first preferred configuration. Said prototype corresponds with a hybrid reluctance rotary motor having an inner rotor. The stator, or first structure (2), is formed by three magnetic assemblies (30), each of them constituting a phase of the motor. The rotor, or second structure (6), is formed by five salient poles. The stator has been designed such that there is an alignment position for aligning the stator poles with the rotor poles for each phase. Therefore, the angle $\alpha$ between the rotor pole axes has a value of 72°, whereas the angle between the alignment position and the non-alignment position is 36°. The nominal prototype features are 3000 rpm, 300 V. DC and IEC size 80. This construction assures better use of the materials, has shorter magnetic circuits and assures independence of the phases, which translates into fewer losses in the air gap and in fault tolerance.

Figures 4A and 4B show the distribution of the flux lines in the alignment position and in the non-alignment position, respectively, of the preceding prototype for a current of 5A. The electromagnetic behavior has been analyzed using the two-dimensional finite element method. As can be seen, the magnetic flux $\phi_M$ of the activated coils (4) is added to the magnetic flux $\phi_M$ of the permanent magnets (5) associated with the coils in the same assembly (30) to generate a magnetic flux $\phi_G$ through the air gap (8), the value of said magnetic flux $\phi_G$ when the coils (4) of the first structure (2) are deactivated being virtually nil.

Figure 5 shows the magnetization curves of the preceding prototype. The graph shows concatenated flux curves ($\psi$) with respect to the current (I) for different positions ($\theta$) between stator and rotor, comprised between the alignment position $\theta=0°$ and the non-alignment position $\theta=36°$.

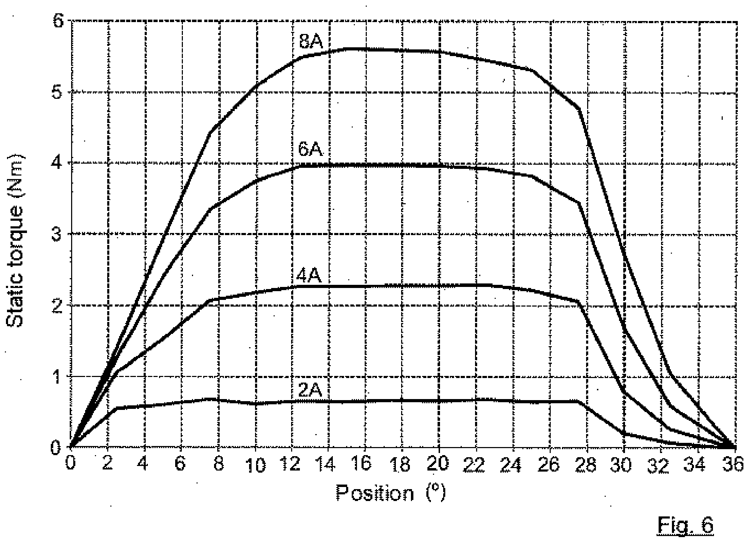

Figure 6 shows the static torque curves, torque with respect to the position for different values of the current, of the preceding prototype.

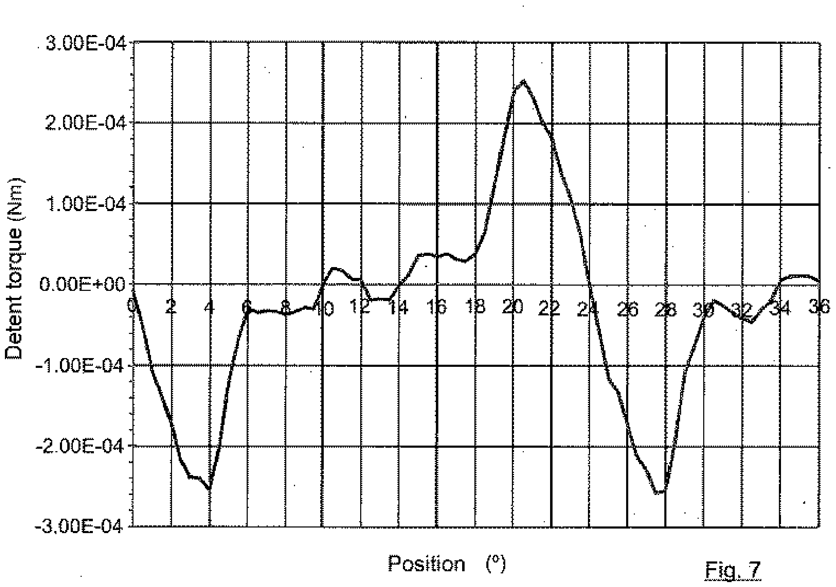

Figure 7 shows the curve of evolution of the detent torque of the preceding prototype. The graph shows the evolution of the torque due to the interaction between the permanent magnets and the rotor poles, i.e., cogging torque or detent torque, for different relative positions when current is not flowing through the coils (4). The results of Figure 7 confirm that said detent torque is virtually nil, reaching a maximum value of $\pm$2.5E-4 Nm. This is because there are no flux lines $\phi_M$ going through the air gap (8) when current is not flowing through the coils (4) of the stator.

Table IV compiles the results obtained from the tests conducted with single pulse control on the preceding prototype for a conduction start position $\theta_{ON}=4°$ and a conduction end position $\theta_{OFF}=28°$.

TABLE IV

| $\theta_{ON}$ | $\theta_{OFF}$ | $V_{DC}$ (V) | $I_{DC}$ (A) | $IF_{RMS}$ (A) | M (Nm) | N (rpm) | $P_{abs}$ (W) | $P_{útil}$ (W) | $\eta_{Conv}$ (%) | $\eta_{Motor}$ (%) | $\eta_{Global}$ (%) |
|---|---|---|---|---|---|---|---|---|---|---|---|
| 4 | 28 | 301 | 2,1 | 1,3 | 1 | 4969 | 637 | 520 | 93,3 | 87,6 | 81,7 |
| 4 | 28 | 301 | 3,1 | 1,9 | 2 | 3723 | 930 | 780 | 95,2 | 88,0 | 83,8 |
| 4 | 28 | 301 | 3,9 | 2,6 | 3 | 3156 | 1187 | 991 | 96,2 | 86,8 | 83,5 |
| 4 | 28 | 301 | 4,7 | 3,3 | 4 | 2789 | 1403 | 1168 | 96,0 | 86,8 | 83,3 |
| 4 | 28 | 301 | 5,4 | 4,2 | 5 | 2469 | 1617 | 1293 | 97,0 | 82,4 | 79,9 |

where $\theta_{ON}$ is the conduction start angle; $\theta_{OFF}$ is the conduction end angle; $V_{DC}$ is the direct current supply voltage; $I_{DC}$ is the direct current input current; $IP_{RMS}$ is the phase current in root means square value; $M$ is the torque; $N$ is the speed; $P_{abs}$ is the absorbed power; $P_{useful}$ is the useful power; $\eta_{Conv}$ is the efficiency of the electronic power converter; $\eta_{Motor}$ is the efficiency of the motor; $\eta_{Overall}$ is the overall efficiency (the overall efficiency is the efficiency resulting from multiplying the efficiency of the electronic power converter $\eta_{Conv}$ by the efficiency of the motor $\eta_{Motor}$, this is the ratio between the useful mechanical power and the absorbed electric power.

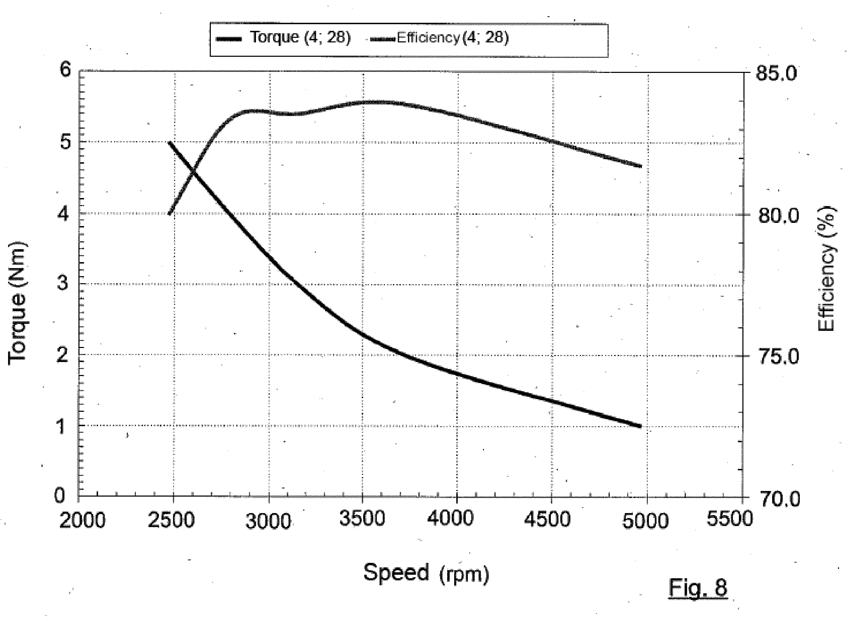

Figure 8 shows the torque-speed and efficiency-speed curves of the preceding prototype. The efficiency depicted corresponds to the overall efficiency, including the product of the efficiency of the motor by the efficiency of the converter.

In view of the results obtained, it can be said that the nominal torque of the prototype built according to the present invention is comprised between 3 and 4 Nm, close to 3.5 Nm, at 3000 rpm. It can therefore be assigned a nominal power of 1100 W. The overall efficiency in these nominal conditions is 83.3% and the efficiency of the hybrid reluctance motor HRM is 86.8%, a value that is within the parameters established for an IE4 (Super Premium) motor according to the IEC standards 60034-31.

The prototype of the hybrid reluctance motor, HRM, has been compared with two switched reluctance motors (SRM) of the same size. One corresponds to a 6/4 SRM, with 6 poles in the stator and 4 poles in the rotor, and the other to a 12/8 SRM, with 12 poles in the stator and 8 poles in the rotor. Table V shows the comparative values of the main dimensions and parameters of the motors in question.

TABLE V

| | HRM | 6/4 SRM | 12/8 SRM |
|---|---|---|---|
| ICE size | 80 | 80 | 80 |
| Nominal power (W) | 1100 | 750 | 750 |
| Nominal speed (rpm) | 3000 | 3000 | 3000 |
| DC voltage (V) | 300 | 300 | 300 |
| Overall efficiency at 300 rpm (%) | 83.8 | 75 | 75 |
| Number of phases | 3 | 3 | 3 |
| Number of electromagnets with permanent magnets | 3 | - | - |
| Number of stator poles | - | 6 | 12 |
| Number of rotor poles | 5 | 4 | 6 |
| Length (mm) | 63 | 59.65 | 60.25 |
| Rotor diameter (mm) | 60.4 | 59.75 | 65 |
| Air gap (mm) | 0.3 | 0.54 | 0.35 |
| Magnetic lamination | 270-50 | 600-50 | 600-50 |
| Mass (g) | 8645 | 6740* | 7435* |
| * Lightweight alloy casing | | | |

Therefore, the HRM prototype has a useful power that is 47% greater than that of an induction motor of the same size (80 mm shaft height) and 2 poles, and furthermore a clearly better overall efficiency.

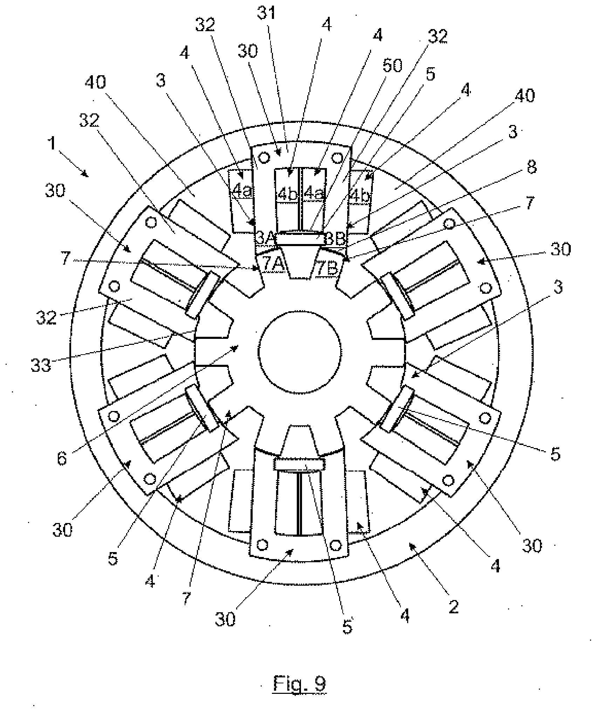

Figure 9 shows a cross-section of the machine of the present invention, according to a variant of the first preferred configuration. In this case the machine (1) shows a configuration comprising six magnetic assemblies (30) in the first structure (2) and a total of ten poles (7) in the second structure (6).

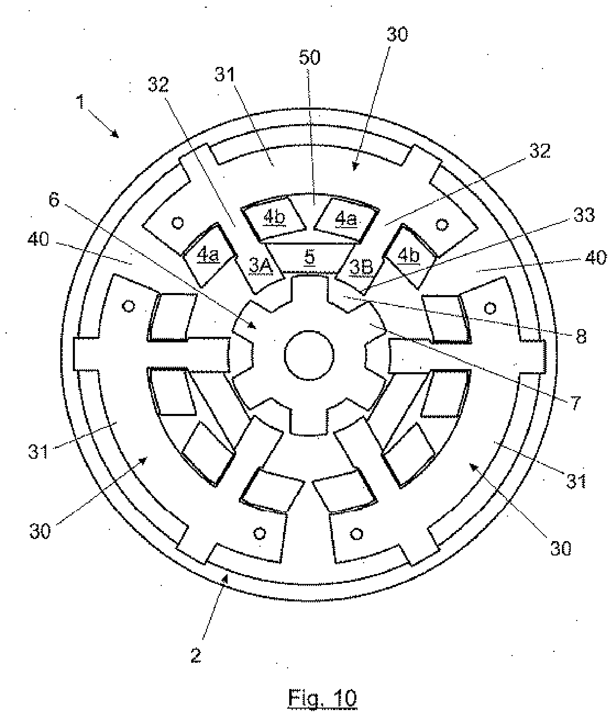

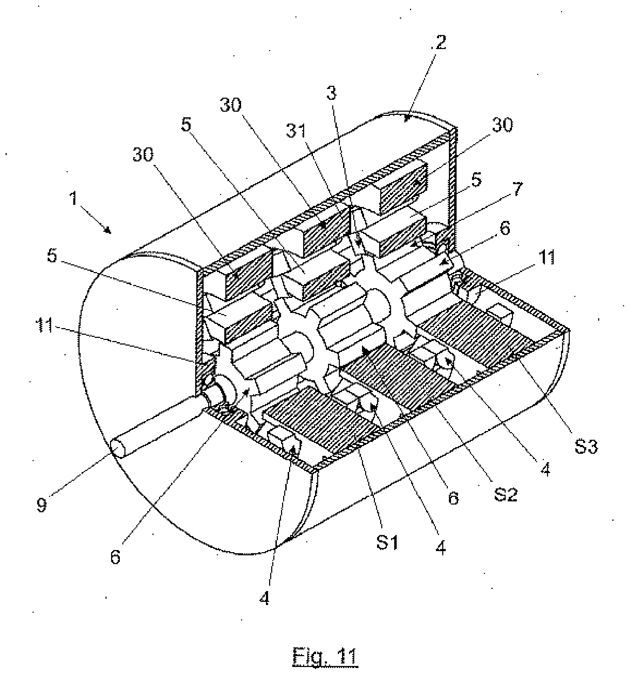

Figure 10 shows a cross-section of the machine of the present invention, according to a multistage configuration thereof having an inner rotor. As can be seen, the ratio expressed above, $N_S=N_R$, i.e., the total number of first poles (3), $N_S$, coincides with the total number of second poles (7), $N_R$, in each of the stages or layers (S1, S2, S3), Figures 11-13, is complied with.

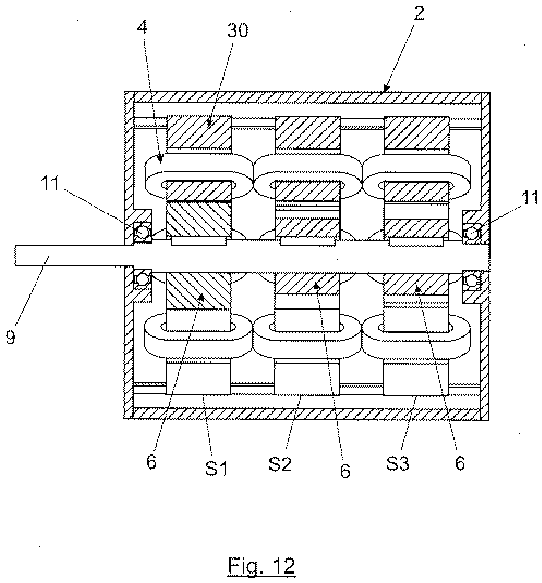

Figures 11 and 12 respectively show a perspective view and a longitudinal section of the machine of the present invention, according to the preceding configuration. As can be seen the first structure (2) and the second structure (6) are arranged in a plurality of parallel layers (S1, S2, S3), where:

- the first poles (3) of the first structure (2) have a nil positional offset $\theta_S$ between one another in each of the layers (S1, S2, S3); and
- the same positional offset $\theta_S$ between the second poles (7) of two parallel layers (S1, S2, S3).

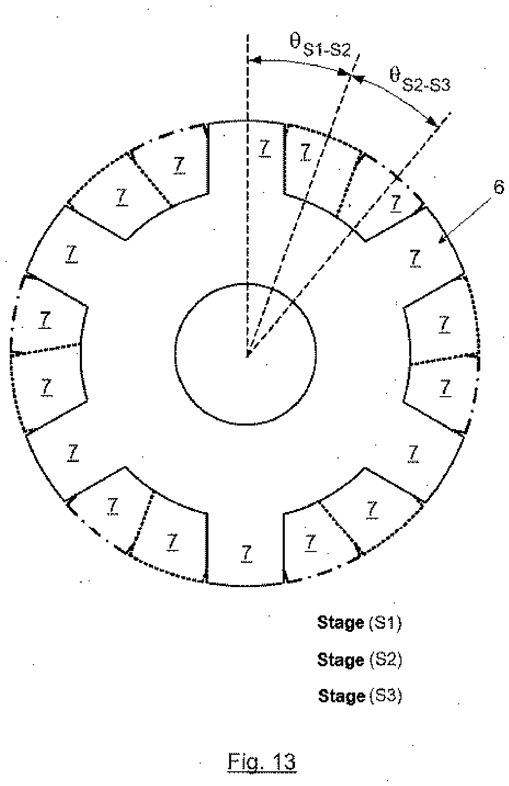

Figure 13 shows a schematic front view of three parallel layers (S1, S2, S3) showing the same positional offset $\theta_S$ between the second poles (7) of consecutive parallel layers (S1, S2, S3).

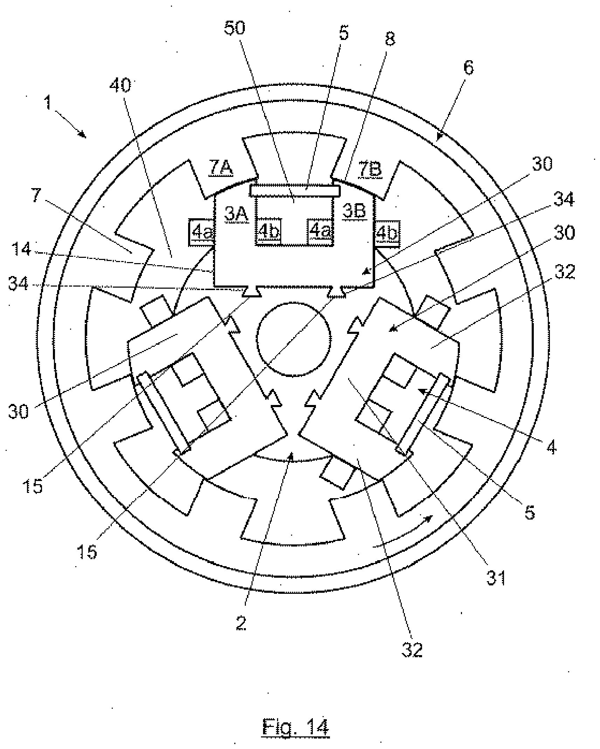

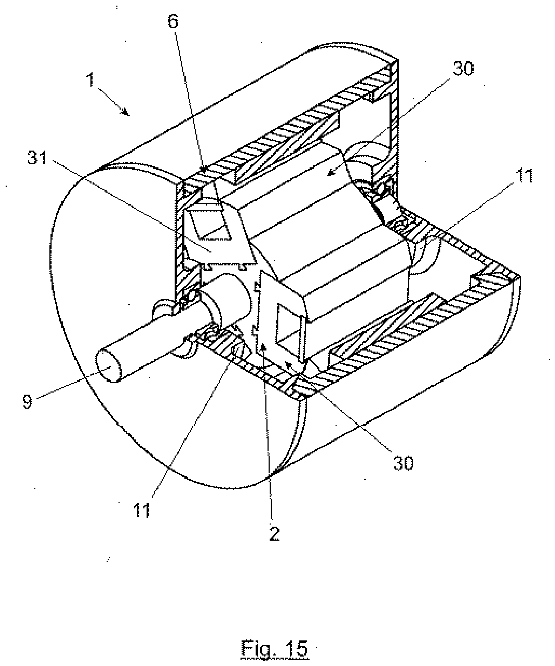

Figures 14 and 15 respectively show a cross-section and a perspective view of the machine of the present invention according to the second preferred configuration. In this case the machine (1) shows an outer rotor configuration comprising three magnetic assemblies (30) in the second structure (6) and a total of eight poles (7) in the first structure (6). As can be seen, the first structure (2) is fixed whereas the second structure (6) is configured to rotate concentrically outside the first structure (2).

To facilitate fast and easy assembly of the magnetic assemblies (30), the first structure (2) comprises grooves (14) in which said magnetic assemblies (30) fit by means of sliding. Likewise, to prevent such assemblies from being secured, the magnetic core (31) comprises one or more sliding and securing rods (34). The rods (34) are configured to slide in rails (15) arranged in the groove (14), which allow the movement of the magnetic assemblies (30) in the axial direction of the first structure (2) once they prevent their movement in the radial direction thereof.

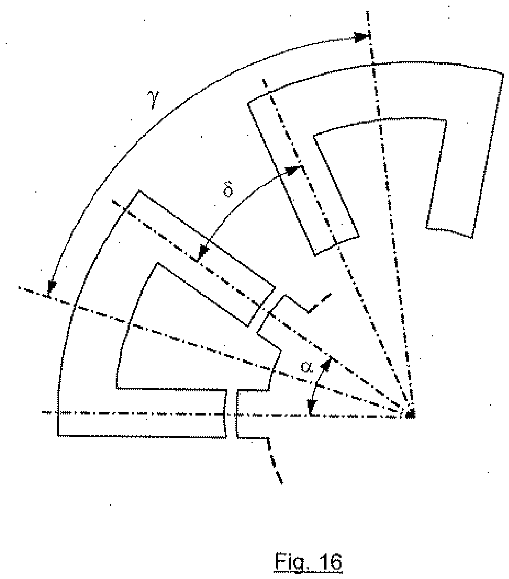

Figure 16 shows a diagram with the angles $\gamma$, $\alpha$ and $\delta$ of the rotary variants of the machine (1) of the present invention.

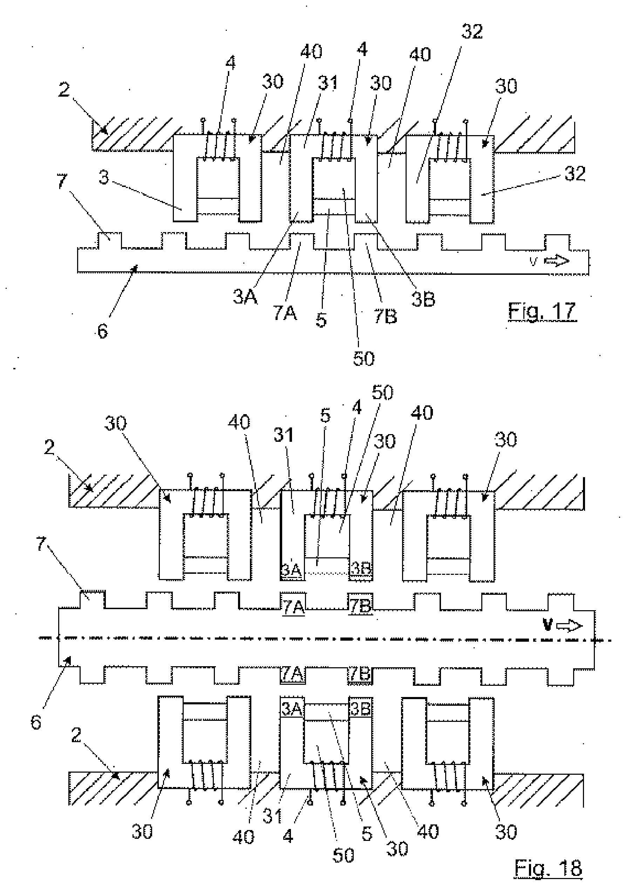

Figure 17 shows an elevational view of the machine of the present invention, according to the third constructive configuration. In this case the machine (1) shows a single-sided linear configuration comprising three magnetic assemblies (30) in the first structure (2) and a total of eight poles (7) in the second structure (6). As can be seen, the first structure (2) is fixed whereas the second structure (6) is configured to move linearly with respect to said first structure (2). Each magnetic assembly (30) is supplied from the same phase different from that of the others.

Figure 18 shows an elevational view of the machine of the present invention according to a variant of the third constructive configuration. In this case the machine (1) shows a two-sided linear configuration comprising a total of six magnetic assemblies (30) with sixteen poles (7). As can be seen, the machine comprises two first structures (2) arranged symmetrically in a fixed position, between which there are arranged two second structures (6) arranged symmetrically which are configured to move linearly with respect to said first structures (2). Each pair of magnetic assemblies (30) in opposition is supplied from the same phase, different from that of the others.

As can be seen in Figures 17 and 18, the coils (4) are wound on the yoke, or the area joining both arms (32).

In the preceding linear embodiments it is also possible to invert the arrangement, arranging the magnetic assemblies (30) on the structure that moves linearly.

**Claims**

1. A hybrid electric reluctance machine comprising:

   - a first structure (2) with poles of the first structure (3) forming a plurality of magnetic assemblies (30) in which a coil (4) and a permanent magnet (5) are combined; and
   - a second structure (6) with poles of the second structure (7) in opposition with the poles of the first structure (3) and separated therefrom by means of an air gap (8), said structures (2, 6) being configured to allow relative rotational or linear movement with respect to one another;

   where the magnetic assemblies (30) are arranged independently, separated circumferentially or linearly from one another by outer non-ferromagnetic gaps (40), wherein each assembly (30) comprises:

- a U-shaped magnetic core (31) structurally and magnetically independent from the first structure (2), the arms (32) of which form a first pole (3A) and a second pole (3B) spaced circumferentially or linearly;
- at least one permanent magnet (5) arranged from the end of the first pole (3A) to the end of the second pole (3B), being defined between the arms (32) and the permanent magnet (5) an inner non-ferromagnetic gap (50); and
- a coil (4) being wound on each of the arms (32), the windings (4a, 4b) of which take up part of the non-ferromagnetic gap (40) between assemblies (30) and a part of the inner non-ferromagnetic gap (50) between poles (3A, 3B), or alternatively the coil (4) being wound on the area joining both arms (32); where the first pole (3A) and the second pole (3B) of at least one assembly (30) are aligned respectively with a third pole (7A) and a fourth pole (7B) of the second structure (6) in a minimum reluctance position.

2. The hybrid electric reluctance machine according to claim 1, **characterized in that** each arm (32) comprises a curved end (33) following a direction parallel to the perimeter formed by the ends of the poles of the second structure (7).

3. The hybrid electric reluctance machine according to any of claims 1 to 2, **characterized in that** the first structure (2) is fixed; and **in that** the second structure (6) is configured to rotate concentrically inside the first structure (2).

4. The hybrid electric reluctance machine according to claim 3, **characterized in that** it comprises a total number $N_P$ of magnetic assemblies (30), a total number $N_S$ of poles of the first structure (3) and a total number $N_R$ of poles of the second structure (7) having the following ratio:

$$N_P = k \cdot m$$

$$N_S = 2 \cdot k \cdot m$$

$$N_R = k(2m-1)$$

where "m" corresponds to the number of electrical phases supplying the coils (4) and "k" corresponds to a multiplier parameter which can take any integer value equal to or greater than 1.

5. The hybrid electric reluctance machine according to any of claims 1 to 2, **characterized in that** the first structure (2) is fixed; and **in that** the second structure (6) is configured to rotate concentrically outside the first structure (2).

6. The hybrid electric reluctance machine according to claim 5, **characterized in that** it comprises a total number $N_P$ of magnetic assemblies (30), a total number $N_S$ of poles of the first structure (3) and a total number $N_R$ of poles of the second structure (7) having the following ratio:

$$N_P = k \cdot m$$

$$N_S = 2 \cdot k \cdot m$$

$$N_R = 2 \cdot k(m+1)$$

where "m" corresponds to the number of electrical phases supplying the coils (4) and "k" corresponds to a multiplier parameter taking any integer value equal to or greater than 1.

7. The hybrid electric reluctance machine according to any of claims 4 or 6, **characterized in that** the magnetic assemblies (30) have an angle $\gamma$ with respect to one another determined by the expression:

$$\gamma = \frac{360^\circ}{N_P}$$

$N_P$ being the total number of magnetic assemblies (30); and **in that** the poles of the second structure (7) have an angle $\alpha$ with respect to one another determined by the expression:

$$\alpha = \frac{360^\circ}{N_R}$$

$N_R$ being the total number of poles of the second structure (7); and **in that** the poles of the first structure (3) have an angle $\delta$ with respect to one another determined by the expression:

$$\delta = \gamma - \alpha = \frac{360^\circ \cdot (N_R - (k \cdot m))}{k \cdot m \cdot N_R}$$

8. The hybrid electric reluctance machine according to any of claims 1 to 2, **characterized in that** the first structure (2) is fixed; and **in that** the second structure (6) is configured to move linearly with respect to said first structure (2).

9. The hybrid electric reluctance machine according to any of claims 1 to 2, **characterized in that** it comprises two first structures (2) arranged symmetrically in a fixed position, between which there are arranged two second structures (6) arranged symmetrically which are configured to move linearly with respect to said first structures (2).

10. The hybrid electric reluctance machine according to any of claims 1 to 9, **characterized in that** the first structure (2) and the second structure (6) are arranged in a plurality of parallel layers (S1, S2, S3), where:

- the poles (3) of the first structure (2) have a nil positional offset $\theta_S$ between one another in each of the layers (S1, S2, S3); and where:
- the positional offset $\theta_S$ between the poles of the second structure (7) of two consecutive parallel layers (S1, S2, S3) has the following ratio:

$$\theta_S = \frac{360^\circ}{m \cdot N_R}$$

where "$N_R$" corresponds to the total number of poles of the second structure (7) of each parallel layer (S1, S2, S3), "$m$" corresponds to the number of electrical phases supplying the coils (4) and "$k$" corresponds to a multiplier parameter taking any integer value equal to or greater than 1.

11. The hybrid electric reluctance machine according to claims 3 and 10, **characterized in that** each parallel layer (S1, S2, S3) comprises a total number $N_P$ of magnetic assemblies (30), a total number $N_S$ of poles of the first structure (3) and a total number $N_R$ of poles of the second structure (7) having the following ratio:

$$N_P = k \cdot m$$

$$N_S = k \cdot m$$

$$N_R = N_S$$

where "$m$" corresponds to the number of electrical phases supplying the coils (4) and "$k$" corresponds to a multiplier parameter taking any integer value equal to or greater than 1.

**Patentansprüche**

1.  Hybride elektrische Reluktanzmaschine, umfassend:

    - eine erste Struktur (2) mit Polen der ersten Struktur (3), die eine Mehrzahl von magnetischen Anordnungen (30) bilden, in denen eine Spule (4) und ein Permanentmagnet (5) vereinigt werden; und
    - eine zweite Struktur (6), wobei die Pole der zweiten Struktur (7) entgegengesetzt zu den Polen der ersten Struktur (3) sind und mittels eines Luftspalts (8) davon getrennt sind, wobei die Strukturen (2, 6) konfiguriert sind, um eine relative Dreh- oder Linearbewegung zueinander zuzulassen;

    wobei die magnetischen Anordnungen (30) unabhängig angeordnet sind, über den Umfang oder linear voneinander durch äußere nicht-ferromagnetische Spalte (40) getrennt sind, wobei jede Anordnung (30) umfasst:

    - einen U-förmigen magnetischen Kern (31), der strukturell und magnetisch unabhängig von der ersten Struktur (2) ist, wobei die Schenkel (32) davon einen ersten Pol (3A) und einen zweiten Pol (3B) bilden, die auf dem Umfang oder linear beabstandet sind;
    - mindestens einen Permanentmagneten (5), der von dem Ende des ersten Pols (3A) zum Ende des zweiten Pols (3B) angeordnet ist, wobei zwischen den Schenkeln (32) und dem Permanentmagneten (5) ein innerer nicht-ferromagnetischer Spalt (50) definiert ist; und
    - eine Spule (4), die um jeden der Schenkel (32) gewickelt ist, wobei die Wicklungen (4a, 4b) einen Teil des nicht-ferromagnetischen Spalts (40) zwischen den Anordnungen (30) und einen Teil des inneren nicht-ferromagnetischen Spalts (50) zwischen den Polen (3A, 3B) aufnehmen, oder wobei alternativ die Spule (4), die auf den Bereich gewickelt ist, beide Schenkel (32) zusammenfügt;

    wobei der erste Pol (3A) und der zweite Pol (3B) mindestens einer Anordnung (30) jeweils mit einem dritten Pol (7A) und einem vierten Pol (7B) der zweiten Struktur (6) in einer minimalen Reluktanzposition miteinander ausgerichtet sind.

2.  Hybride elektrische Reluktanzmaschine nach Anspruch 1, **dadurch gekennzeichnet, dass** jeder Schenkel (32) ein gekrümmtes Ende (33) umfasst und einer Richtung parallel zu dem Umfang folgt, der durch die Enden der Pole der zweiten Struktur (7) gebildet wird.

3.  Hybride elektrische Reluktanzmaschine nach einem der Ansprüche 1 bis 2, **dadurch gekennzeichnet, dass** die erste Struktur (2) ortsfest ist; und dadurch, dass die zweite Struktur (6) konfiguriert ist, um konzentrisch innerhalb der ersten Struktur (2) zu drehen.

4.  Hybride elektrische Reluktanzmaschine nach Anspruch 3, **dadurch gekennzeichnet, dass** sie eine Gesamtanzahl $N_P$ von magnetischen Anordnungen (30), eine Gesamtanzahl Ns von Polen der ersten Struktur (3) und eine Gesamtzahl $N_R$ von Polen der zweiten Struktur (7) mit dem folgenden Verhältnis umfasst:

$$N_P = k \cdot m$$

$$N_S = 2 \cdot k \cdot m$$

$$N_R = 2 \cdot k(m+1)$$

    wobei *"m"* der Anzahl der elektrischen Phasen entspricht, welche die Spulen (4) versorgen, und *"k"* einem Multiplikatorparameter entspricht, der einen beliebigen ganzzahligen Wert gleich oder größer als 1 annehmen kann.

5.  Hybride elektrische Reluktanzmaschine nach einem der Ansprüche 1 bis 2, **dadurch gekennzeichnet, dass** die erste Struktur (2) ortsfest ist; und dadurch, dass die zweite Struktur (6) konfiguriert ist, um konzentrisch außerhalb der ersten Struktur (2) zu drehen.

6.  Hybride elektrische Reluktanzmaschine nach Anspruch 5, **dadurch gekennzeichnet, dass** sie eine Gesamtanzahl $N_P$ von magnetischen Anordnungen (30), eine Gesamtanzahl Ns von Polen der ersten Struktur (3) und eine Gesamtzahl $N_R$ von Polen der zweiten Struktur (7) mit dem folgenden Verhältnis umfasst:

$$N_P = k \cdot m$$

$$N_S = 2 \cdot k \cdot m$$

$$N_R = 2 \cdot k(m+1)$$

wobei *"m" d*er Anzahl der elektrischen Phasen entspricht, welche die Spulen (4) versorgen, und *"k"* einem Multiplikatorparameter entspricht, der einen beliebigen ganzzahligen Wert gleich oder größer als 1 annimmt.

7. Hybride elektrische Reluktanzmaschine nach einem der Ansprüche 4 oder 6, **dadurch gekennzeichnet, dass** die Magnetanordnungen (30) einen Winkel $\gamma$ zueinander aufweisen, der durch den Ausdruck bestimmt wird:

$$\gamma = \frac{360^\circ}{N_P}$$

wobei $N_P$ die Gesamtzahl der Magnetanordnungen (30) ist;
und dadurch, dass die Pole der zweiten Struktur (7) einen Winkel $\alpha$ zueinander aufweisen, der durch den Ausdruck bestimmt wird:

$$\alpha = \frac{360^\circ}{N_R}$$

wobei $N_R$ die Gesamtzahl der Pole der zweiten Struktur (7) ist;
und dadurch, dass die Pole der ersten Struktur (3) einen Winkel $\alpha$ zueinander aufweisen, der durch den Ausdruck bestimmt wird:

$$\delta = \gamma - \alpha = \frac{360^\circ \cdot (N_R - (k \cdot m))}{k \cdot m \cdot N_R}$$

8. Hybride elektrische Reluktanzmaschine nach einem der Ansprüche 1 bis 2, **dadurch gekennzeichnet, dass** die erste Struktur (2) ortsfest ist; und dadurch, dass die zweite Struktur (6) konfiguriert ist, um sich linear in Bezug auf die erste Struktur (2) zu bewegen.

9. Hybride elektrische Reluktanzmaschine nach einem der Ansprüche 1 bis 2, **dadurch gekennzeichnet, dass** sie zwei erste Strukturen (2) aufweist, die symmetrisch in einer festen Position angeordnet sind, zwischen denen zwei zweite Strukturen (6) angeordnet sind, die symmetrisch angeordnet sind und die konfiguriert sind, um sich linear in Bezug auf die ersten Strukturen (2) zu bewegen.

10. Hybride elektrische Reluktanzmaschine nach einem der Ansprüche 1 bis 9, **dadurch gekennzeichnet, dass** die erste Struktur (2) und die zweite Struktur (6) in einer Mehrzahl von parallelen Schichten (S1, S2, S3) angeordnet sind, wobei:

- die Pole (3) der ersten Struktur (2) zwischen jeder der Schichten (S1, S2, S3) einen Nullpositionsversatz $\theta_S$ zueinander aufweisen; und wobei:
- der Positionsversatz $\theta_S$ zwischen den Polen der zweiten Struktur (7) von zwei aufeinanderfolgenden parallelen Schichten (S1, S2, S3) folgendes Verhältnis hat:

$$\theta_S = \frac{360^\circ}{m \cdot N_R}$$

wobei *"N_R"* der Gesamtzahl der Pole der zweiten Struktur (7) jeder parallelen Schicht (S1, S2, S3) entspricht, *"m"* der Anzahl der elektrischen Phasen, welche die Spulen (4) versorgen, entspricht und *"k"* einem Multiplikatorparameter entspricht, der einen ganzzahligen Wert gleich oder größer als 1 annimmt.

**11.** Hybride elektrische Reluktanzmaschine nach einem der Ansprüche 3 und 10, **dadurch gekennzeichnet, dass** jede parallele Schicht (S1, S2, S3) eine Gesamtanzahl $N_P$ von magnetischen Anordnungen (30), eine Gesamtanzahl $N_S$ von Polen der ersten Struktur (3) und eine Gesamtzahl $N_R$ von Polen der zweiten Struktur (7) mit dem folgenden Verhältnis umfasst:

$$N_P = k \cdot m$$

$$N_S = k \cdot m$$

$$N_R = N_S$$

wobei *"m"* der Anzahl der elektrischen Phasen entspricht, welche die Spulen (4) versorgen, und *"k"* einem Multiplikatorparameter entspricht, der einen beliebigen ganzzahligen Wert gleich oder größer als 1 annimmt.

**Revendications**

**1.** Machine électrique hybride à réluctance comprenant :

- une première structure (2) avec des pôles de la première structure (3) formant une pluralité d'assemblages magnétiques (30) dans laquelle une bobine (4) et un aimant permanent (5) sont combinés ; et
- une deuxième structure (6) avec des pôles de la deuxième structure (7) en opposition avec les pôles de la première structure (3) et séparés les uns des autres au moyen d'un interstice d'air (8), lesdites structures (2, 6) étant configurées pour permettre un mouvement relatif rotationnel ou linéaire l'une par rapport à l'autre ;

où les assemblages magnétiques (30) sont disposés indépendamment, séparés circonférentiellement ou linéairement les uns des autres par des interstices non ferromagnétiques externes (40), dans laquelle chaque assemblage (30) comprend :

- un noyau magnétique en forme de U (31) structurellement et magnétiquement indépendant de la première structure (2), dont les bras (32) forment un premier pôle (3A) et un deuxième pôle (3B) espacés circonférentiellement ou linéairement ;
- au moins un aimant permanent (5) disposé de l'extrémité du premier pôle (3A) à l'extrémité du deuxième pôle (3B), un interstice non ferromagnétique interne (50) étant défini entre les bras (32) et l'aimant permanent (5) ; et
- une bobine (4) étant enroulée sur chacun des bras (32), dont les enroulements (4a, 4b) recouvrent une partie de l'interstice non ferromagnétique (40) entre les assemblages (30) et une partie de l'interstice non ferromagnétique interne (50) entre les pôles (3A, 3B), ou alternativement la bobine (4) étant enroulée sur la zone reliant lesdits bras (32) ;

où le premier pôle (3A) et le deuxième pôle (3B) d'au moins un assemblage (30) sont alignés respectivement avec un troisième pôle (7A) et un quatrième pôle (7B) de la deuxième structure (6) dans une position de réluctance minimale.

**2.** Machine électrique hybride à réluctance selon la revendication 1, **caractérisée en ce que** chaque bras (32) comprend une extrémité recourbée (33) suivant un sens parallèle au périmètre formé par les extrémités des pôles de la deuxième structure (7).

**3.** Machine électrique hybride à réluctance selon l'une quelconque des revendications 1 à 2, **caractérisée en ce que** la première structure (2) est fixe ; et **en ce que** la deuxième structure (6) est configurée pour tourner concentriquement à l'intérieur de la première structure (2).

4. Machine électrique hybride à réluctance selon la revendication 3, **caractérisée en ce qu'**elle comprend un nombre total $N_P$ d'assemblages magnétiques (30), un nombre total $N_S$ de pôles de la première structure (3) et un nombre total $N_R$ de pôles de la deuxième structure (7) ayant le rapport suivant :

$$N_P = k \cdot m$$

$$N_S = 2 \cdot k \cdot m$$

$$N_R = 2 \cdot k(m+1)$$

où « $m$ » correspond au nombre de phases électriques alimentant les bobines (4) et « $k$ » correspond à un paramètre multiplicateur qui peut prendre n'importe quelle valeur entière égale à ou supérieure à 1.

5. Machine électrique hybride à réluctance selon l'une quelconque des revendications 1 à 2, **caractérisée en ce que** la première structure (2) est fixe ; et **en ce que** la deuxième structure (6) est configurée pour tourner concentriquement à l'extérieur de la première structure (2).

6. Machine électrique hybride à réluctance selon la revendication 5, **caractérisée en ce qu'**elle comprend un nombre total $N_P$ d'assemblages magnétiques (30), un nombre total $N_S$ de pôles de la première structure (3) et un nombre total $N_R$ de pôles de la deuxième structure (7) ayant le rapport suivant :

$$N_P = k \cdot m$$

$$N_S = 2 \cdot k \cdot m$$

$$N_R = 2 \cdot k(m+1)$$

où « $m$ » correspond au nombre de phases électriques alimentant les bobines (4) et « $k$ » correspond à un paramètre multiplicateur prenant n'importe quelle valeur entière égale à ou supérieure à 1.

7. Machine électrique hybride à réluctance selon l'une quelconque des revendications 4 ou 6, **caractérisée en ce que** les assemblages magnétiques (30) ont un angle $\gamma$ l'un par rapport à l'autre déterminé par l'expression :

$$\gamma = \frac{360^\circ}{N_P}$$

$N_P$ étant le nombre total d'assemblages magnétiques (30) ;
et **en ce que** les pôles de la deuxième structure (7) ont un angle $\alpha$ l'un par rapport à l'autre déterminé par l'expression :

$$\alpha = \frac{360^\circ}{N_R}$$

$N_R$ étant le nombre total de pôles de la deuxième structure (7) ;
et **en ce que** les pôles de la première structure (3) ont un angle $\delta$ l'un par rapport à l'autre déterminé par l'expression :

$$\delta = \gamma - \alpha = \frac{360^\circ \cdot (N_R - (k \cdot m))}{k \cdot m \cdot N_R}$$

8. Machine électrique hybride à réluctance selon l'une quelconque des revendications 1 à 2, **caractérisée en ce que** la première structure (2) est fixe ; et **en ce que** la deuxième structure (6) est configurée pour se déplacer linéairement par rapport à ladite première structure (2).

9. Machine électrique hybride à reluctance selon l'une quelconque des revendications 1 à 2, **caractérisée en ce qu'**elle comprend deux premières structures (2) disposées symétriquement dans une position fixe, entre lesquelles sont disposées deux deuxièmes structures (6) disposées symétriquement qui sont configurées pour se déplacer linéairement par rapport auxdites premières structures (2).

10. Machine électrique hybride à réluctance selon l'une quelconque des revendications 1 à 9, **caractérisée en ce que** la première structure (2) et la deuxième structure (6) sont disposées dans une pluralité de couches parallèles (S1, S2, S3), où :

   - les pôles (3) de la première structure (2) ont un décalage positionnel nul $\theta_S$ entre eux dans chacune des couches (S1, S2, S3) ; et où :
   - le décalage positionnel $\theta_S$ entre les pôles de la deuxième structure (7) de deux couches parallèles consécutives (S1, S2, S3) a le rapport suivant :

$$\theta_S = \frac{360°}{m \cdot N_R}$$

   où « $N_R$ » correspond au nombre total de pôles de la deuxième structure (7) de chaque couche parallèle (S1, S2, S3), « $m$ » correspond au nombre de phases électriques alimentant les bobines (4) et « $k$ » correspond à un paramètre multiplicateur prenant n'importe quelle valeur entière égale à ou supérieure à 1.

11. Machine électrique hybride à réluctance selon les revendications 3 et 10, **caractérisée en ce que** chaque couche parallèle (S1, S2, S3) comprend un nombre total $N_P$ d'assemblages magnétiques (30), un nombre total $N_S$ de pôles de la première structure (3) et un nombre total $N_R$ de pôles de la deuxième structure (7) ayant le rapport suivant :

$$N_P = k \cdot m$$

$$N_S = k \cdot m$$

$$N_R = N_S$$

   où « $m$ » correspond au nombre de phases électriques alimentant les bobines (4) et « $k$ » correspond à un paramètre multiplicateur prenant n'importe quelle valeur entière égale à ou supérieure à 1.

Fig. 1

Fig. 2

Fig. 3

Fig. 4A

Fig. 4B

Fig. 5

Fig. 6

Fig. 7

Fig. 8

EP 2 693 613 B1

Fig. 9

Fig. 10

Fig. 11

Fig. 12

Stage (S1)

Stage (S2)

Stage (S3)

Fig. 13

Fig. 14

Fig. 15

Fig. 16

Fig. 17

Fig. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005107356 A,  Mr. Oscar Rolando Ávila Cusicanqui

- US 2012181793 A